# FASCICULE DE BREVET EUROPEEN

(11) **EP 1 110 697 B1**
(45) Date de publication et mention de la délivrance du brevet: **15.11.2006**
(21) Numéro de dépôt: 00204610.0
(22) Date de dépôt: 19.12.2000
(51) Int. Cl.: B29C 49/20, B29K 23/00, B29L 31/30

(54) **Procédé de fabrication de corps creux en matière plastique**
Verfahren zum Herstellen von Hohlkörpern aus Kunststoff
Method for producing hollow objects made of thermoplastic material

(30) Priorité: 22.12.1999 BE 9900830
(43) Date de publication de la demande: 27.06.2001
(60) Demande divisionnaire: 06121223.9
(73) Titulaire: Inergy Automotive Systems Research (SA), 1120 Bruxelles (BE)
(72) Inventeur: Van Schaftingen, Jules-Joseph, 1300 Wavre (BE); Gerard, Yannick, 1950 Kraainem (BE); Leonard, Stéphane, 1070 Bruxelles (BE); Dupont, Serge, 1800 Vilvoorde (BE); Op de Beeck, Joel, 2570 Duffel (BE)
(74) Mandataire: Decamps, Alain René François

(56) Documents cités:
- US-A- 4 952 347
- PATENT ABSTRACTS OF JAPAN vol. 010, no. 189 (M-494), 3 juillet 1986 (1986-07-03) -& JP 61 032735 A (HOWA KASEI:KK), 15 février 1986 (1986-02-15)
- PATENT ABSTRACTS OF JAPAN vol. 008, no. 227 (M-332), 18 octobre 1984 (1984-10-18) -& JP 59 109329 A (INOUE EMU TEE PII KK), 25 juin 1984 (1984-06-25)
- PATENT ABSTRACTS OF JAPAN vol. 1995, no. 09, 31 octobre 1995 (1995-10-31) -& JP 07 156255 A (SHOWA DENKO KK), 20 juin 1995 (1995-06-20)
- PATENT ABSTRACTS OF JAPAN vol. 017, no. 018 (M-1352), 13 janvier 1993 (1993-01-13) -& JP 04 244828 A (NISSAN MOTOR CO LTD), 1 septembre 1992 (1992-09-01)

## Description

La présente invention concerne un procédé pour la fabrication de corps creux en matière plastique.

Les corps creux en matière plastique sont utilisés dans un nombre d'industries diverses et variées pour des usages multiples, notamment comme réservoirs à gaz et à liquides. Ces corps creux doivent souvent satisfaire, pour certains usages particuliers, à des normes d'étanchéité en rapport avec les exigences en matière d'environnement qu'ils doivent respecter. On assiste actuellement, tant en Europe que dans le monde à un renforcement considérable des exigences concernant la limitation des fuites de polluants dans l'atmosphère et la nature en général. La conception de corps creux destinés à contenir des liquides et des gaz évolue en conséquence rapidement vers des techniques capables de mieux garantir l'étanchéité et la sécurité sous des conditions variées d'utilisation. Par ailleurs, on s'est aussi efforcé de réduire au maximum les pertes ayant pour origine les canalisations et accessoires divers liés aux corps creux. Un moyen parfois utilisé a été d'incorporer certains accessoires et canalisations à l'intérieur même des corps creux, éliminant ainsi leur interface avec l'atmosphère extérieure.

L'insertion d'accessoires dans une paraison destinée à être ensuite soufflée pour produire un corps creux est bien connue par elle-même et se rencontre dans de nombreuses applications industrielles de fabrication de corps creux, en particulier dans celle des réservoirs à liquide et à gaz.

L'insertion d'accessoires dans une paraison cylindrique fermée s'avère cependant délicate dès que leur encombrement est important : il importe en effet que la paraison vienne coiffer les accessoires sans interférer avec ceux-ci avant que l'opération de soufflage ne soit effectuée.

On connaît par le brevet US-4,952,347 un procédé de fabrication de réservoir à carburant en matière plastique qui comprend l'extrusion de deux feuilles plates parallèles entre lesquelles on vient insérer les accessoires. Les deux feuilles sont ensuite moulées par rapprochement et fermeture de deux parois d'un moule dans lequel on introduit un gaz de soufflage et dont les extrémités réalisent la soudure des deux feuilles l'une sur l'autre de façon former le corps creux contenant les accessoires en son intérieur.

Ce procédé a toutefois l'inconvénient de nécessiter le positionnement de deux têtes d'extrusion et/ou d'extrudeuses capables de produire simultanément deux feuilles plates dont la régularité de l'épaisseur et de la production soit constante d'une feuille à l'autre et en tout point de chacune des feuilles.

Le document JP 04 244828 (Patent Abstracts of Japan vol.017, n°018 du 13/1/1993) divulgue un procédé de fabrication d'un corps creux à partir du moulage d'une paraison dans laquelle une entaille a été réalisée en cours d'extrusion de la paraison. Le profil du moule permet, au soufflage, de créer à la fois un corps creux et une tubulure. Cependant il n'est pas prévu dans ce dispositif ni d'insérer un accessoire dans le corps creux, la découpe de la paraison ne permettant qu'une mise en forme plus aisée de celle-ci, ni de guider la paraison par un dispositif approprié.

L'invention a pour but de fournir un procédé qui évite les inconvénients des procédés connus et permette l'insertion et le positionnement aisés et rapides d'accessoires encombrants dans un corps creux sans risquer de produire des irrégularités non souhaitées dans les parois du corps creux obtenu.

A cet effet l'invention concerne un procédé de fabrication de corps creux en matière plastique à partir d'une paraison extrudée de section fermée, qui est conforme à la revendication 1.

Par corps creux, on désigne tout objet dont la surface présente au moins une partie vide ou concave. En particulier, le procédé selon l'invention est bien adapté à la fabrication d'objets creux qui se présentent sous la forme de corps fermés, tels que les réservoirs.

Les corps creux produits selon le procédé conforme à l'invention sont réalisés en matière plastique, c'est-à-dire en matière comprenant au moins un polymère en résine de synthèse.

Tous les types de matière plastique peuvent convenir. Des matières plastiques convenant bien appartiennent à la catégorie des matières thermoplastiques.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyoléfines greffées, des polyesters thermoplastiques, des polycétones, des polyamides et leurs copolymères. Un copolymère souvent utilisé est le copolymère éthylène - alcool vinylique (EVOH). Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères décrits supra. De telles structures multicouches peuvent être obtenues à l'aide d'une tête de coextrusion ou par une technique de recouvrement total ou partiel d'une couche substrat par une ou plusieurs autres couches. Un exemple de la technique de recouvrement est la projection de matière plastique sur la couche substrat par pistolage.

Un polymère souvent employé est le polyéthylène. D'excellents résultats ont été obtenus avec du polyéthylène haute densité (PEHD).

Par paraison extrudée on désigne le produit obtenu par passage dans une filière d'une composition d'au moins une matière thermoplastique fondue et homogénéisée dans une machine d'extrusion dont la tête se termine par la filière. Selon l'invention, la paraison a une section fermée. De préférence, cette section est circulaire ou elliptique.

Conformément au procédé selon l'invention, on réalise au moins une découpe dans la paraison sortant de la filière montée sur la tête d'extrusion. L'opération de découpe consiste à trancher sur la totalité de son épaisseur la paroi de la paraison selon une courbe de forme et de longueur prédéterminées. De préférence, la courbe de découpe est rectiligne. Selon l'invention, la découpe est réalisée en continu sur la totalité de la longueur de la paraison. De manière la plus préférée, on réalise la découpe en ligne droite sur la totalité de la longueur de la paraison.

La paraison découpée est ensuite mise en forme par moulage, c'est-à-dire par insertion entre au moins deux parties d'un moule suivie de la fermeture de ces parties et pressage à une température et pendant une durée prédéterminées.

De préférence, l'opération de moulage comprend une opération de soufflage et une opération de soudage. Ces deux opérations distinctes peuvent s'effectuer indépendamment en séquence dans un ordre quelconque. Elles peuvent aussi, de préférence, s'effectuer, au moins en partie, de manière concomitante.

L'opération de soufflage à l'intérieur du moule dont les parois peuvent être maintenues à une température déterminée par tout moyen de chauffage ou de refroidissement adéquat permet de réaliser une mise en forme de la paraison découpée.

L'opération de soudage dans le moule consiste à pincer la périphérie de la paraison, au moins partiellement, et à souder ensemble par fusion à chaud les surfaces de la paraison qui ont été pincées.

En option, il est aussi possible de réaliser un traitement superficiel du corps creux obtenu. Des exemples de tels traitements superficiels sont, de manière non limitative : la fluoration, la sulfonation et le recouvrement par une autre composition ou matière.

De préférence, on met en oeuvre le procédé dans une ligne de fabrication intégrée comprenant l'extrusion de la paraison et sa mise en forme par moulage. On produit en particulier des paraisons identiques au moyen d'une lame de couteau qui vient couper transversalement, à intervalles réguliers, l'extrudat sortant de la filière.

De manière préférée, la découpe de la paraison s'effectue de manière longitudinale, selon une génératrice de celle-ci. Il est dans ce cas particulièrement intéressant que cette découpe se fasse dans le sens de l'écoulement de la paraison.

Selon l'invention, la découpe de la paraison est réalisée sur toute sa longueur en double, c'est-à-dire, selon deux lignes distinctes, de manière à produire deux feuilles séparées. La découpe selon deux génératrices parallèles est tout particulièrement préférée.

Les deux feuilles obtenues peuvent être maintenues à distance constante l'une de l'autre jusqu'à la phase de fermeture du moule. On peut aussi, en variante, modifier au cours du temps l'écartement des deux feuilles jusqu'à fermeture du moule. Selon cette variante, il est aussi possible de rapprocher les feuilles l'une de l'autre au moment où le moule se referme. Ceci permet avantageusement de réduire les chutes de fabrication.

Selon l'invention, les deux parties de la paraison découpée sont tenues écartées à distance suffisante l'une de l'autre pour qu'il soit possible d'insérer entre elles, avant moulage, un objet destiné à être incorporé à l'intérieur du corps creux. Ainsi on peut insérer en particulier un objet volumineux. On peut aussi combiner la découpe en double produisant deux feuilles séparées avec la technique d'écartement à distance suffisante des parties de paraison découpée. Dans ce dernier cas, ce sont alors les feuilles séparées qui sont maintenues écartées.

Cet objet volumineux peut être introduit, de manière traditionnelle, par le côté inférieur des feuilles, à contre sens de l'écoulement.

De manière plus avantageuse, cet objet peut être introduit latéralement, voire par la partie supérieure de la feuille. De cette façon, on peut choisir la zone ou le côté de la feuille où l'espace disponible est le moins encombré. Cette façon de faire est particulièrement avantageuse pour les objets de grandes dimensions.

Selon l'invention, les feuilles issues de la découpe de la paraison sont guidées à l'intervention d'un dispositif de guidage. Ce dispositif de guidage peut être choisi parmi tout dispositif de guidage d'objet aplati en matière plastique bien connu en soi. On peut utiliser, par exemple, des galets et/ou des rouleaux. Le dispositif de guidage peut comporter en outre, un dispositif d'extension transversale et/ou longitudinale de la feuille.

Le procédé selon l'invention est intéressant lorsque l'on désire insérer dans la paraison découpée au moins un accessoire destiné à être incorporé dans le corps creux. Le procédé selon l'invention est particulièrement avantageux lorsque l'on désire insérer entre les feuilles au moins un accessoire destiné à être incorporé dans le corps creux.

Par accessoire on entend désigner tout objet ou dispositif généralement associé au corps creux dans son mode d'utilisation ou de fonctionnement habituel et qui coopère avec celui-ci pour assurer certaines fonctions utiles. Des exemples non limitatifs de tels accessoires sont : des pompes à liquide, des pipettes, des réservoirs ou baffles intérieurs au corps creux, des dispositifs de ventilation.

De préférence, l'accessoire inséré, surtout lorsqu'il est inséré en plusieurs exemplaires, identiques ou non, est porté par une structure préassemblée. Cette façon de faire présente l'avantage de pouvoir réaliser la structure préassemblée portant l'ensemble ou tout au moins plusieurs des accessoires à introduire dans le corps creux dans un processus séparé préalable à leur introduction dans le corps creux. Il en résulte un montage ultérieur par insertion dans le corps creux grandement facilité et permet de sous-traiter plus aisément la réalisation de structures préassemblées d'accessoires relativement complexes.

On peut aussi, indépendamment de l'insertion d'accessoires décrite supra, insérer entre les feuilles une structure préassemblée qui comprend au moins un dispositif pour l'ancrage de cette structure sur la paroi interne du corps creux. Un tel dispositif est, par exemple un bras muni d'une languette de fixation sur la paroi du corps creux. Ces languettes peuvent, par exemple être solidarisées par soudage sur la paroi du corps creux, lors de la fermeture du moule. Alternativement, elles peuvent être judicieusement disposées pour s'appuyer par coinçage entre des parois opposées du corps creux.

On peut aussi concevoir la structure préassemblée de manière telle qu'elle porte aussi un dispositif d'ancrage qui ne sera utilisé qu'ultérieurement pour la fixation d'un accessoire. Un exemple est la fixation d'un accessoire provenant d'un fabricant différent de celui de la structure préassemblée et que l'on voudrait insérer en même temps que ceux déjà présents sur cette structure. Un autre exemple pourrait aussi être la possibilité de venir fixer un accessoire après la fabrication du corps creux, dans une étape indépendante de celle-ci, via une ouverture que l'on pratiquerait dans sa paroi.

Alternativement, on peut avantageusement combiner l'insertion d'au moins un accessoire sur une structure préassemblée avec la structure à dispositif d'ancrage. L'intérêt réside ici dans la réduction du nombre d'objets à insérer, chacun d'entre eux pouvant remplir les deux fonctions de support pour les accessoires et d'ancrage dans la paroi ou pour un accessoire à introduire ultérieurement.

Il est aussi possible de prévoir le réchauffage ou le refroidissement d'au moins une partie des feuilles par tout moyen adéquat tel que, par exemple, mais non limitativement : rayonnement de lampes infrarouges, convection de gaz chaud ou froid, ... Lorsque les feuilles sont complètement séparées sur la totalité de leur pourtour avant leur moulage, l'approche et le positionnement des moyens de réchauffage et/ou de refroidissement sont grandement facilités.

Le procédé selon l'invention est bien adapté à la mise en oeuvre de moyens de positionnement des objets volumineux et des structures préassemblées qui confèrent une très haute précision de montage dans le corps creux.

Un exemple de ces moyens est l'utilisation de supports en forme de films, de feuilles ou de plaques en polyoléfine, solidaires de l'objet ou la structure en des endroits tels qu'il est possible de supporter et de déplacer l'objet ou la structure en le maintenant par traction entre des pinces. Les films, feuilles ou plaques sont par exemple solidarisés avec la structure en des points situés à 180 ° l'un de l'autre. Avantageusement, les films, feuilles ou plaques se prolongent à l'extérieur du périmètre des feuilles et permettent ainsi le maintien et le positionnement continu de l'objet ou de la structure pendant la fermeture du moule. Les films, feuilles ou plaques se trouvent de cette façon pris entre les zones de pinçage de la paraison qui sont destinées à être solidarisées. Un mode de solidarisation préféré est le soudage. De cette manière, les films, feuilles ou plaques se fondent, tout au moins en surface, lors de l'opération de soudage avec la surface intérieure de la paraison.

Les films, feuilles ou plaques ont généralement des épaisseurs d'au moins 5 µm. Cette épaisseur ne dépasse généralement pas 20 mm. De préférence, on utilise des films d'au moins 50 µm d'épaisseur. Ces films préférés ne dépassent généralement pas 1 mm d'épaisseur. L'avantage d'utiliser des films d'un telle épaisseur faible réside dans la limitation des pertes de gaz et/ou de liquide contenus dans le corps creux au droit des zones d'assemblage des feuilles.

Un moyen supplémentaire de positionnement précis des objets volumineux ou des structures préassemblées à l'intérieur du corps creux est de munir les films, feuilles ou plaques servant au support de cônes en matière plastique destinés à venir s'insérer exactement dans des parties en relief correspondant situées sur les bords du moule, dans les zones de soudage de la paraison.

L'invention permet aussi l'utilisation de moules mobiles et l'insertion latérale d'une tuyère de soufflage, quelques instants avant la fermeture du moule, ce qui procure l'avantage de pouvoir raccourcir le temps de cycle et d'augmenter les cadences de production.

Le procédé selon l'invention est bien adapté à la fabrication de corps creux qui sont des réservoirs à carburant. En particulier, il convient pour la fabrication de réservoirs à carburant destinés à être montés sur les véhicules automobiles.

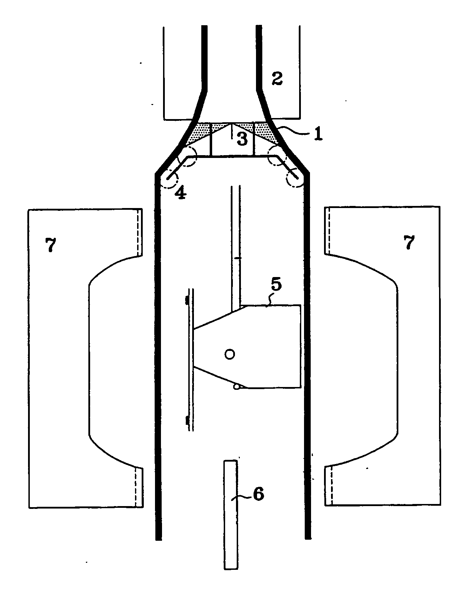

La figure qui suit est donnée dans le but d'illustrer une réalisation concrète de l'invention, sans vouloir aucunement en restreindre sa portée. Elle représente une installation d'extrusion-soufflage à extrusion continue utilisée pour produire des réservoirs à essence pour automobile.

L'extrudat tubulaire (1) de section circulaire multicouche qui comporte des couches externes en polyéthylène haute densité, ainsi qu'une couche centrale barrière en copolymère éthylène - alcool vinylique (EVOH) entourée de deux couches d'adhésif en polyéthylène greffé d'anhydride maléique, sort de la tête d'extrusion (2) et est séparé en deux feuilles (1), à l'aide de deux lames (3) en acier placées à 180 ° l'une de l'autre, à la sortie de la filière circulaire montée sur la tête d'extrusion (2).

Les deux feuilles (1) sont guidées et écartées à l'aide de galets (non représentés) et de rouleaux (4). Au début d'un cycle, les deux parties (7) d'un moule ouvert viennent se placer sous la tête d'extrusion (2) . Un robot (non représenté) positionne alors la structure (5) supportant les accessoires à intégrer dans le réservoir. Une tuyère de soufflage (6) est également positionnée entre les deux parties de moule. Ce dernier est ensuite refermé sur l'ensemble feuilles et accessoires, causant le soudage des deux feuilles, pendant que de l'air de soufflage est introduit sous pression via la tuyère (6), de manière à réaliser la mise en forme des feuilles.

## Revendications

1. - Procédé de fabrication d'un réservoir à carburant en matière plastique à partir d'une paraison extrudée (1) de section fermée, dans laquelle on pratique une découpe de la paraison (1) que l'on met ensuite en forme par moulage, la découpe se faisant de manière longitudinale, dans le sens de l'écoulement de la paraison (1), et étant réalisée sur toute sa longueur en double, selon deux lignes distinctes, de manière à produire deux feuilles séparées (7), **caractérisé en ce que** les feuilles (7) issues de la découpe de la paraison (1) sont guidées à l'intervention d'un dispositif de guidage (4) et sont tenues écartées avant leur moulage pendant qu'on insère entre elles un accessoire (5) qui est destiné à être incorporé dans le réservoir.

2. - Procédé selon la revendication précédente, **caractérisé en ce que** l'opération de moulage comprend une opération de soufflage et une opération de soudage.

3. - Procédé selon une quelconque des revendications précédentes, **caractérisé en ce qu'**il est mis en oeuvre dans une ligne de fabrication intégrée comprenant l'extrusion de la paraison (1) et sa mise en forme par moulage.

4. - Procédé selon une quelconque des revendications précédentes, **caractérisé en ce que** l'on insère entre les feuilles (7) une structure préassemblée (5) qui comprend au moins un dispositif pour l'ancrage de cette structure (5) sur la paroi interne du réservoir.

5. - Procédé selon une quelconque des revendications précédentes, **caractérisé en ce que** l'on utilise des supports en forme de films, de feuilles ou de plaques en polyoléfine, solidaires de l'objet ou la structure (5) en des endroits tels qu'il est possible de supporter et de déplacer l'objet ou la structure (5) en le maintenant par traction entre des pinces.

## Claims

1. Process for manufacturing a plastic fuel tank from an extruded parison (1) of closed cross section, where at least one cut is made in the parison (1) which is then formed by moulding, the parison (1) is cut longitudinally in the direction of the flow of the parison (1), and the parison (1) is cut twice over its entire length, along two separate lines, so as to produce two separate sheets (7), **characterized in that** the sheets (7) obtained by cutting the parison (1) are guided by means of a guiding device (4) and are held apart before moulding, while an accessory (5) intended to be incorporated inside the tank is inserted between the sheets (7).

2. Process according to the preceding claim, **characterized in that** the moulding operation comprises a blowing operation and a welding operation.

3. Process according to any one of the preceding claims, **characterized in that** it is used in an integrated manufacturing line comprising the extrusion of the parison (1) and its forming by moulding.

4. Process according to any one of the preceding claims, **characterized in that** a preassembled structure (5), which comprises at least one device for anchoring this structure (5) to the internal wall of the tank, is inserted between the sheets (7).

5. Process according to any one of the preceding claims, **characterized in that** supports in the form of films, sheets or plates made of polyolefin are used, these being attached to the object or the structure (5) at points such that it is possible to support and move the object or the structure (5) while holding it, by pulling, between grippers.

## Patentansprüche

1. Verfahren zum Herstellen eines Kraftstoffbehälters aus Kunststoff aus einem extrudierten Vorformling (1) mit geschlossenem Querschnitt, bei welchem man in dem Vorformling (1) einen Schnitt anbringt und sodann durch Formung in einer Form formt, wobei das Schneiden des Rohlings in der Längsrichtung des Verlaufes des Vorformlings (1) erfolgt, wobei das Schneiden ferner über die gesamte Länge gemäß zweier unterschiedlicher Linien doppelt erfolgt, um zwei separate Folien (7) zu erzeugen, **dadurch gekennzeichnet, daß** die Folien (7), die durch das Schneiden des Rohlings (1) entstehen, mit Hilfe einer Führungsvorrichtung (4) geführt und vor ihrer Formung im gegenseitigen Abstand gehalten werden, während man zwischen die beiden ein Zubehör (5) einführt, welches dazu bestimmt ist, in den Behälter aufgenommen zu werden.

2. Verfahren nach dem vorhergehenden Anspruch, **dadurch gekennzeichnet, daß** der Formungsvorgang einen Blasformungsvorgang und einen Schweißvorgang umfaßt.

3. Verfahren nach einem der vorhergehenden Ansprüche, **dadurch gekennzeichnet, daß** es in einer integrierten Fabrikationsstraße ausgeführt wird, welche die Extrusion des Vorformlings (1) und seine Formung durch Formen in einer Form umfaßt.

4. Verfahren nach einem der vorhergehenden Ansprüche, **dadurch gekennzeichnet, daß** man zwischen die Folien (7) eine vorher zusammengebaute Struktur (5) einfügt, die zumindest eine Vorrichtung zum Verankern dieser Struktur (5) an der Innenwand des Behälters umfaßt.

5. Verfahren nach einem der vorhergehenden Ansprüche, **dadurch gekennzeichnet, daß** man Träger in Form von Filmen, Folien oder Platten aus Polyolefin verwendet, die mit dem Gegenstand oder der Struktur (5) an Stellen verbunden sind, die es ermöglichen, den Gegenstand oder die Struktur (5) abzustützen und zu verlagern, indem er bzw. sie zwischen Formklemmen gespannt gehalten wird.
